# EUROPÄISCHE PATENTSCHRIFT

(11) **EP 1 735 760 B1**
(45) Veröffentlichungstag und Bekanntmachung des Hinweises auf die Patenterteilung: **15.11.2017**
(21) Anmeldenummer: 05744012.5
(22) Anmeldetag: 13.04.2005
(51) Int. Cl.: G06Q 20/34, G06Q 20/40, G07F 7/10, G06K 19/07

(54) **DATENSCHUTZGERECHTES RADIO FREQUENCY IDENTIFICATION (RFID)-SYSTEM DURCH BESITZERKONTROLLIERTE RFID-TAG FUNKTIONALITÄT**
DATA PROTECTIVE RADIO-FREQUENCY IDENTIFICATION (RFID) SYSTEM BY MEANS OF AN OWNER CONTROLLED RFID-TAG FUNCTIONALITY
SYSTEME D'IDENTIFICATION PAR RADIOFREQUENCE (RFID) SATISFAISANT A LA PROTECTION DES DONNEES ET REPOSANT SUR UNE FONCTIONNALITE D'ETIQUETTE RFID CONTROLEE PAR LE PROPRIETAIRE

(30) Priorität: 13.04.2004 DE 102004018367
(43) Veröffentlichungstag der Anmeldung: 27.12.2006
(73) Patentinhaber: SAP SE, 69190 Walldorf (DE)
(72) Erfinder: BERTHOLD, Oliver, 10961 Berlin (DE)
(74) Vertreter: Müller-Boré & Partner Patentanwälte PartG mbB
(86) Internationale Anmeldenummer: PCT/DE2005/000648
(87) Internationale Veröffentlichungsnummer: WO 2005/101333

(56) Entgegenhaltungen:
- US-A- 5 640 002
- US-A- 6 104 281
- US-A1- 2002 135 478
- US-A1- 2004 054 900
- US-A1- 2004 066 278

## Beschreibung

Die Erfindung betrifft einen RFID-Tag nach dem Oberbegriff des Anspruchs 1.

Die Anmeldung betrifft eine Erweiterung der Funktionalität so genannter RFID (Radio Frequency Identification) Systeme. RFID-Tags und die notwendige Infrastruktur wie z.B. Lesegeräte sind dem Stand der Technik seit langem bekannt und werden beispielsweise zur Kennzeichnung von Gegenständen verwendet. RFID-Tags weisen normalerweise eine Sende- und Empfangsvorrichtung auf, mit der sie u.a. eine Kennzeichnung (Identifikationsdaten) an ein Lesegerät (Reader) übertragen können und andere vom Lesegerät angewiesene (aufgerufene) Funktionen ausführen können, sobald sich ein RFID-Tag in dessen Wirkungsbereich befindet.

Die Kennzeichnung dient der Identifizierung der RFID-Tags und somit des damit verbundenen Gegenstandes. In naher Zukunft können diese RFID-Tags die bisher verwendeten Barcodes auf Konsumprodukten ersetzen, um Logistikprozesse sowie die Prozesse im Supermarkt zu vereinfachen. Beispielsweise sind Selbstbedienungskassen geplant, da der mit RFID-Tags versehene Inhalt eines Einkaufwagens komplett in einem Schritt gescannt werden kann.

Die vorliegende Erfindung adressiert die Privacy-Problematik dieser Technologie: Da jeder RFID-Tag eine eindeutige Seriennummer tragen soll, kann der Weg jedes Konsumprodukts - damit ist jeder einzelne Gegenstand gemeint - unbemerkt und auch noch nach Verlassen des Supermarktes ausgelesen werden. Dadurch sind Menschen anhand dieser Seriennummern verfolgbar und können zudem bezüglich aller mitgeführten Produkte (z.B. der Kleidung) durch jedermann gescannt werden. Sollten diese Daten, was zumindest zu befürchten ist, gesammelt und mit Hilfe von Datenbanken gespeichert und ausgewertet werden, wird das von Datenschützern und Privacy-Aktivisten befürchte Szenario vom "Gläsernen Menschen" Wirklichkeit.

Bisher setzt die Industrie dieser Vision nur eine so genannte Kill-Funktion entgegen, mit der die RFID-Tags z.B. nach dem Bezahlen endgültig deaktiviert werden können. Leider verhindert die endgültige Deaktivierung der RFID-Tags eine Reihe von Anwendungen. Insbesondere sind Anwendungen betroffen, die normalerweise erst nach dem Kauf eines Produktes zum Einsatz kommen, wie beispielsweise eine intelligente Waschmaschine, welche Waschtemperatur und - programm anhand der eingeworfenen Kleidungsstücke automatisch ermittelt. RFID-Tags, welche eine solche Killfunktion zur Verfügung stellen, werden in den Spezifikationen Version 1.0 des EPC Global (http://epcglobalinc.org/standardstechnologie/specifications. html) beschrieben.

Dokument US 2002/0135478 A1 bezieht sich auf einen Transponder, welcher einen Datenspeicher und Mittel zur kontaktlosen Interaktion mit einer Basisstation umfaßt. Der Transponder wird in ein aktives Feld der Basisstation gebracht. Bevor der Transponder durch die Basisstation durch Übertragen eines Kommando-Signals deaktiviert wird, wird eine Authentifikation der Basisstation für eine Deaktivierung überprüft.

Die Erfindung löst das beschriebene Privacy-Problem der bisherigen RFID-Technologie und ermöglicht im Unterschied zur bekannten Killfunktion zugleich eine Weiternutzung der Technologie für intelligente gegebenenfalls vernetzte Geräte mit einem RFID-Tag gemäß den Merkmalen des Anspruchs 1, einem Lesegerät gemäß den Merkmalen des Anspruchs 13 sowie einem Verfahren nach den Merkmalen von Ansprüchen 17 und 19.

Vorteilhafte Ausgestaltungen ergeben sich jeweils aus den abhängigen Ansprüchen. Im Folgenden wird wiederholt auf ein Beispiel der Produktauszeichnung mittels RFID-Tags Bezug genommen. Dieses Beispiel ist lediglich eine typische Anwendung der erfindungsgemäßen Lehre. Der Fachmann erkennt, dass auch andere Verwendung denkbar sind.

Die Erfindung erweitert die Funktionalität der RFID-Tags um die Möglichkeit zur dynamischen Aktivierung, Deaktivierung oder Einschränkung der (Identifikations-)Funktionalität der RFID-Tags. Konkret ist: damit gemeint, dass anhand eines internen Zustandes entschieden wird, welche Funktionen ein RFID-Tag in welchem Umfang ausführt, wenn eine bestimmte Anforderung des Lesegarätes empfangen wird. Insbesondere wird ein Zustand vorgesehen, bei welchem der RFID-Tag keine der intern gespeicherten Daten, die üblicherweise eine Identifizierung ermöglichen, ausgibt.

Jedoch sollte der RFID-Tag in jedem Zustand die zwischen Lesegerät und RFID-Tag gültigen Kommunikationsprotokolle soweit erfüllen, dass das Übermitteln und Empfangen von Daten und Befehlen möglich ist.

Beispielsweise muss ein RFID-Tag seine Anwesenheit gegenüber einem Lesegerät signalisieren und an einem so genannten Singulation oder Anti-Collusion Protokoll teilnehmen, um überhaupt individuelle Befehle empfangen zu können. In den obigen EPC Global Spezifikationen wird ein Anti-Collusion Protokoll vorgestellt, welches ohne Verwendung der gespeicherten identifizierenden Daten auskommt.

In der DE 101 61 302 werden Anti-Collusion-Protokolle vorgeschlagen, die auf regelmäßig neu generierten Zufallswerten statt auf identifizierenden Daten basieren.

Eine vorteilhafte Ausführungsform des RFID-Tags stellt eine Funktion zur Änderung des internen Zustandes zur Verfügung. Dabei wird diese Funktion nur ausgeführt, nachdem das die Funktion aufrufende Lesegerät die Kenntnis eines geheimen Datensatzes, einer auf dem RFID-Tag gespeicherten Bitfolge, nachgewiesen hat. Der geheime Datensatz wird im Folgenden als Passwort bezeichnet. Die Nachweisfunktion wird im Folgenden als Verifikation bezeichnet.

Eine weitere Ausführungsform des RFID-Tag sieht einen wiederbeschreibbaren, nichtflüchtigen Speicherplatz für die Einspeicherung des Passwortes vor. Das erste Passwort kann dabei in vorteilhafter Weise beim Herstellungsprozess des RFID-Tags oder beim Verbinden des Produktes mit dem RFID-Tag gesetzt werden. Idealerweise sollte die Einschreibung des Passwortes zusammen mit der Einschreibung der Identifikationsdaten erfolgen, da beides in jedem Schritt der Logistikkette mit dem Produkt mitgesendet werden sollte.

Es werden zwei vorteilhafte Ausprägungen der PasswortVerifikation bei RFID-Systemen offenbart:
In einem ersten Beispiel wird zur Verifikation das Passwort vom Lesegerät zum RFID-Tag gesendet. Der Vorteil dieser Methode der Verifikation ist eine sehr einfache Implementierbarkeit auf dem RFID-Tag. Es wird nur eine Vergleichsfunktion des gespeicherten mit dem erhaltenen Passwort benötigt. Der Nachteil ist, dass das Passwort von anderen Geräten durch Abhören der Funkkommunikation ermittelt werden kann.

In einer zweiten, erfindungsgemäßen Ausprägung steht sowohl im RFID-Tag als auch im Lesegerät ein Mittel (hier auch als "Funktion" bezeichnet) zur Verfügung, welche das Passwort und einen weiteren Wert zu einem Prüfwert kombiniert. Zudem steht im RFID-Tag ein Randomisierungsmittel zur Erzeugung eines zufälligen Wertes (Zufallswert) zur Verfügung. Die Ausprägung (d. h. die Wahl des Algorithmus) des Randomisierungsmittels zur Erzeugung des Zufallswertes ist grundsätzlich beliebig. Beispielsweise kann eine Rauschquelle mit einer Sampling-Schaltung (z. B. eine Diode) verwendet werden oder auf einen bei der Herstellung individuell vergebenem Initialwert wiederholt eine Hashfunktion angewendet werden und die Zufallsfolge aus Teilen der jeweiligen Zwischenwerte gebildet werden. Das Mittel zur Berechnung des Prüfwertes kann beliebig realisiert werden. Ideal wäre eine, kryptographisch sichere Einwegfunktion oder eine symmetrische Verschlüsselungsfunktion, wobei einer der Eingabewerte als Schlüssel verwendet würde, da so die Umkehrung der Funktion bzw. die Ermittlung eines unbekannten dritten Werte bei Kenntnis der beiden anderen schwer oder unmöglich ist.

Die Realisierungsoptionen des Prüfwertmittels beinhalten auch die Möglichkeit, die Berechnung nur auf Basis eines Eingabewertes durchzuführen, wobei entweder nur das interne Passwort verwendet wird oder ein weiteres beliebiges Mittel genutzt wird, um die Eingabewerte zu kombinieren. Die Realisierungsoptionen des Prüfwertmittels beinhalten auch die Möglichkeit die Berechnung auf Basis von mehr als zwei Eingabewerten durchzuführen. Die Realisierungsoptionen des Prüfwertmittels beinhalten auch die Möglichkeit mehr als einen Ausgabewert zu berechnen.

In dieser Ausprägung der Verifikation erzeugt das RFID-Tag als erstes einen Zufallswert, speichert diese in einem Speicher und sendet den Zufallswert zudem an das Lesegerät. Das Lesegerät verwendet das Prüfwertmittel, wobei als Eingabe das Passwort und der empfangene Zufallswert verwendet werden. Den Prüfwert sendet das Lesegerät an den RFID-Tag. Der RFID-Tag berechnet einen zweiten Prüfwert anhand des gespeicherten Passwortes und dem gespeicherten Zufallswert und vergleicht beide Prüfwerte. Wenn beide Prüfwerte übereinstimmen, wird die durch die Verifikation geschützte Funktion ausgeführt.

Alternativ kann das Mittel auf dem RFID-Tag die Berechnung auch umkehren, also aus dem Prüfwert und einem Eingabewert den jeweils anderen berechnen und diesen vergleichen. Der Vorteil der zweiten Ausprägung der Verifikation ist die Abhörsicherheit, Nachteil die höhere schaltungstechnische Komplexität des RFID-Tags.

Die Sicherheit des Verfahren, also der Schutz vor der Ermittelbarkeit des Passwortes durch Dritte ist abhängig von der kryptographischen Güte des Prüfwertmittels zur (d.h. wie schwer die Umkehrung der Einwegfunktion oder die Ermittlung des unbekannten Wertes ist), der kryptographischen Güte des Zufallsgenerators und der Länge der verwendeten Bitfolgen für Passwort, Zufallswert und Prüfwert.

Des Weiteren stellt eine Ausführungsform des erfindungsgemäßen RFID-Tag ein Mittel (eine Funktion) zum Ändern des Passwortes bereit. Diese Funktion wird dabei nur nach einer erfolgreichen Verifikation des bisherigen Passwortes ausgeführt. Dabei wird das neue Passwort vom Lesegerät zum RFID-Tag übertragen.

Es werden zwei vorteilhafte Ausprägungen für die Übertragung eines Passwortes vom Lesegerät zum RFID-Tag der RFID-Systemen offenbart:
In der ersten Ausprägung der Passwortübertragung wird das neue Passwort vom Lesegerät zum RFID-Tag gesendet. Der Vorteil dieser Ausprägung der Erfindung ist die einfache Implementierbarkeit auf dem RFID-Tag. Der Nachteil ist die Möglichkeit des Abhörens durch ein anderes Gerät.

In der zweiten vorteilhaften Ausprägung der Passwortübertragung steht sowohl im RFID-Tag als auch im Lesegerät jeweils ein Mittel zur Verfügung, welches aus zwei Eingabewerten einen dritten berechnen kann. Dieses Mittel kann beliebig realisiert werden, wobei die Berechnung in so fern umkehrbar sein muss, als dass ein Mittel existiert, welches aus einem der Eingabewerte und dem Ausgabewert den zweiten Eingabewert berechnen kann. Ein Beispiel für solche Mittel sind beliebige symmetrische Verschlüsselungsfunktionen oder die bitweise XOR-Überlagerung der beiden Eingabewerte. Die Realisierungsoptionen der Mittel beinhalten auch die Möglichkeit die Berechnung auf Basis von mehr als zwei Eingabewerten durchzuführen. Die Real isierungsoptionen der Mittel beinhalten auch die Möglichkeit mehr als einen Ausgabewert zu berechnen.

Der Vorteil dieser Ausprägung der Erfindung ist die höhere Abhörsicherheit, Nachteil die höhere schaltungstechnische Komplexität des RFID-Tags. Die Sicherheit des Verfahrens ist von kryptographischen Güte der verwendeten Mittel und von der Länge der verwendeten Werte abhängig, wobei die einfache bitweise XOR Überlagerung (One-Time-Pad) bereits maximale Sicherheit bietet und somit optimal ist.

Damit das Passwort bzw. der Zustand des RFID-Tags geändert werden kann, ist es für den aktuellen Besitzer eines RFID-Tags notwendig, das jeweilige Passwort zu kennen.

Im Gegensatz zur bisherigen Lösung auf Basis Killfunktionen (EPC Standard) wird bei der vorliegenden Erfindung das Passwort z.B. an oder nach der Supermarktkasse an den Kunden übergeben (z.B. durch einen Ausdruck auf dem Kassenbon). Dadurch erhält der Kunde die vollständige Kontrolle über die Funktionalität seiner RFID-Tags.

Durch Änderung des Passwortes übernimmt der jeweilige Besitzer die alleinige Kontrolle über die Funktionalität eines RFID-Tags, da die bisherigen Besitzer nunmehr ein falsches Passwort in ihren Datenbanken gespeichert haben.

Die Erfindung betrifft auch ein vorteilhaftes Verfahren zum Ändern der Passwörter, welches das Problem löst, das RFID-Tags, die sich in einem deaktivierten Zustand befinden, nicht identifiziert werden können und somit deren Passwort nicht ermittelt werden kann.

Das vorteilhafte Verfahren beinhaltet, dass ein Besitzer allen in seinem Besitz befindlichen RFID-Tags das gleiche Passwort einspeichert. Erst danach oder dabei erfolgt die Deaktivierung. Idealerweise sollte dieses Verfahren z.B. bereits an der Supermarktkasse durchgeführt werden.

Der Wechsel des Besitzers eines RFID-Tags, beispielsweise an der Kasse eines Supermarktes, sollte in zwei Schritten erfolgen:
1. Der bisherige Besitzer ändert das Passwort der zu übergebendes RFID-Tags auf einen zufällig gewählten Wert. Bei Übergabe des Objektes teilt der alte Besitzer dem neuen Besitzer das verwendete Passwort mit.
2. Der neue Besitzer führt möglichst außerhalb der Funk-Reichweite (in seinem Vertrauensbereich) eine zweite Passwortänderung durch, wobei der Besitzer üblicherweise ein gemeinsames Passwort für alle seine RFID-Tags verwendet.

Eine vorteilhafte Schrittfolge an einer Supermarktkasse ist:
1. Wahl eines zufälligen Wertes als neues Passwort durch das Lesegerät.
2. Auslesen der Identifikation eines RFID-Tags.
3. Ändern des Passwortes des RFID-Tags auf den neuen Wert, das jeweilig notwendige bisherige Passwort erhält das Lesegerät durch Abfrage einer Datenbank, beispielsweise der Produkt-Bestandsdatenbank des Supermarktes.
4. Deaktivieren des RFID-Tags.
5. Wenn weitere RFID-Tags vorhanden sind, Fortfahren mit Schritt 2.
6. Übergabe des Passwortes für diesen Einkauf an den neuen Besitzer der Produkte, beispielsweise durch Drucken auf den Kassenzettel oder durch übertragen an ein sich im Besitz des Kunden befindliches Gerät (z.B. Chipkarte)

Damit alle in Besitz einer Person/eines Haushalts befindlichen RFID-Tags das gleiche Passwort enthalten, sollte die Passwortänderung durch ein Lesegerät im Vertrauensbereich der Person wiederholt werden.

Dabei kann eine ähnliche Schrittfolge verwendet werden, mit dem Unterschied, dass Schritt 1 nur einmal durchgeführt und das einmal im Gerät gespeicherte Passwort für alle RFID-Tags verwendet wird. Das bisherige Passwort, notwendig in Schritt 3 steht dem Nutzer durch Schritt 6 vorherigen Passwortänderung zur Verfügung und muss ggf. an das Lesegerät übermittelt werden. Schritt 6 fällt weg.

Es werden drei Möglichkeiten vorgeschlagen, wie das Zwischenpasswort dem Nutzer mitgeteilt werden kann:
1. Übertragen an irgendein elektronisches Gerät im Besitz des Kunden (z.B. Handy).
2. Direkt übertragen (senden) an das Haussystem des Kunden (insbesondere für Fernabsatz/Internet-Bestellung)
3. Drucken auf den Kassenzettel : Die dritte Möglichkeit könnte in einer Anlaufphase der Technologie besonders wichtig sein, wenn nur wenige Kunden intelligente Haushaltsgeräte haben. Man könnte sozusagen wichtige RFID-Tags nachträglich migrieren, wenn ein solches Gerät angeschafft wurde. Andererseits ist Einkaufen so auch ohne das elektronische Gerät möglich, welches die Passwörter speichert.

In einer weiteren vorteilhaften Ausprägung der Erfindung erfolgt der Besitzerwechsel nur durch Übergabe des bisherigen Passwortes. Diese Möglichkeit ist u.U. an der SupermarktKasse praktikabel, da die RFID-Tags bei der Herstellung ein individuelles Passwort zugewiesen bekommen. Für die Weitergabe aus einem Vertrauensbereich in einen anderen ist diese Vorgehensweise jedoch nicht zu empfehlen, da dem neuen Besitzer in diesem Fall das gemeinsame Passwort aller RFID-Tags des vorherigen Besitzers mitgeteilt werden müsste.

Die beschriebenen Privacy-Probleme der RFID-Technologie, welche sich auf alle Vorgänge nach Verlassen des Supermarktes beziehen, werden durch die Erfindung gelöst, da sich deaktivierte RFID-Tags sich nur noch gegenüber autorisierten Scannern identifizieren.

Aufgrund der auf einem Passwort basierenden Möglichkeit der Zugriffbeschränkung auf die RFID-Tagfunktionalität wird u.a. erreicht, dass ein RFID-Tag nur von verifizierten Lesegeräten vollständig kontrolliert werden kann. Durch das Ändern des Passwortes kann die Kontrolle des RFID-Tags auf den aktuellen Besitzer beschränkt werden. Zudem kann der Besitzer den Zugriff unautorisierter beliebig beschränken. Folgende beispielhaften Beschränkungen wären denkbar:
- Vollständige Anonymisierung: Ein unverifiziertes Lesegerät erhält keinen Teil der Kennzeichnung, d.h. der RFID-Tag ist nicht identifizierbar.
- Anonymisierung der Seriennummer: RFID-Tags können so verwendet werden, dass sie eine EPC (Electronic Product Code) ausgeben, der aus einer Produktkennung und einer Seriennummer des einzelnen Objektes besteht. In dieser Ausprägung würde nur die Produktkennung ausgegeben. Welches konkrete Objekt des Produktes vorliegt, bleibt verborgen.
- Anonymisierung der Identifikationsnummer aber Offenlegung anderer Informationen: Die Ausgabe der Identifikationsnummer wird auf verifizierte Lesegeräte beschränkt, aber beliebige andere Informationen die in einer Ausprägung der Erfindung von einem verifizierten Lesegerät geändert werden können, abrufbar über zusätzliche Funktionen, werden allgemein zur Verfügung gestellt. Dies ermöglicht beispielsweise Recycling-Informationen über die chemischen Bestandteile lesbar zu gestalten oder für Information für Rücknahmeautomaten pfandpflichtiger Verpackungen.

Die Erfindung sieht ein Mittel vor welches aus zwei Eingabewerten einen Prüfwert berechnet. Beispiele für die Realisierung eines solchen Mittels sind eine kryptographische Hash-Funktion (Einwegfunktion) oder eine symmetrische Verschlüsselungsfunktion. Mit Hilfe eine Challenge-Response Verfahrens und unter Mitwirkung des RFID-Tag- oder Produktherstellers kann die Echtheit des RFID-Tags und somit unter Einschränkungen auch die Echtheit des Produktes überprüft werden.

Hintergrund der Ausprägung der Erfindung ist die Tatsache, dass es problemlos möglich ist, freiprogrammierbare RFID-Tags herzustellen - aus produktionstechnischen Gründen dürften sogar nahezu alle RFID-Tags ohne konkrete Identifikationsnummer hergestellt werden und diese statt dessen erst am Produkt die erste und endgültige Programmierung erhalten. RFID-Tags ohne verifizierbare Identifikationsnummer werden daher Produktfälschungen eher erleichtern statt zu erschweren.

Für diese Ausprägung muss im erfindungsgemässen RFID-Tag neben dem Passwort ein weiterer geheimer Wert gespeichert werden, der in einem nicht wiederbeschreibbaren Speicher abgelegt sein kann. Zudem muss im Computersystem des Produkt- oder RFID-Tag-Herstellers ein Mittel vorgesehen sein, welches die

Berechnung des Mittels im RFID-Tag wiederholen oder umkehren kann. Zudem benötigt das Lesegerät in der Regel eine Online-Verbindung zu dem Computersystem des Herstellers. Der Hersteller benötigt außerdem eine Datenbank, die zu jedem RFID-Tag zumindest die Identifikationsnummer und den auch im RFID-Tag abgelegten geheimen Wert speichert.

In einer Ausprägung des beanspruchten Verfahrens übersendet das Lesegerät dem RFID-Tag einen zufälligen Wert. Der RFID-Tag berechnet mit Hilfe des Mittels den Prüfwert, wobei der Zufallswert und der im RFID-Tag gespeicherte geheime Wert als Eingabe verwendet werden. Der Prüfwert wird an das Lesegerät zurückgesendet. Das Lesegerät sendet die Kombination aus RFID-Tag-Identifikationsdaten, Zufallswert und Prüfwert an den Hersteller. Der Hersteller überprüft die Korrektheit mit Hilfe seines Mittels und dem in seiner Datenbank gespeicherten geheimen Wert für den angefragten RFID-Tag. Dabei werden je nach Ausprägung des Mittels zwei der drei Werte (Zufallswert, Prüfwert und geheimer Wert des RFID-Tags) als Eingabewerte verwendet und das Ergebnis mit dem dritten Wert verglichen. Der Hersteller meldet das Ergebnis des Vergleiches an das Lesegerät.

In einem anderen Beispiel erhält das Lesegerät bereits vorab eine oder mehrere gültige Kombination aus Zufallswert und Prüfwert für einen bestimmten RFID-Tag. Die Überprüfung der Echtheit des RFID-Tags kann dann lokal erfolgen, ohne dass eine Online-Verbindung notwendig wäre, indem der in der Kombination erhaltene Zufallswert an den RFID-Tag gesendet wird und die Antwort des RFID-Tags mit dem Prüfwert verglichen wird.

Bestandteile der Anmeldung sind zudem (vernetzte) Lesegeräte mit folgenden besonderen Funktionalitäten:
- Funktion zum Verifizieren (Senden des Passwortes bzw. Durchführen des Challenge Response Verfahrens und der entsprechenden Mittel zum Nachweis der Kenntnis des Passwortes
   - Aufrufen von Funktion nach Verifikation des Passwortes
   - Funktion zum Ändern des Zustandes
   - Funktion zum Ändern des Passwortes
   - Methode das gemeinsame Passwort zu speichern und nur an bekannt vertrauenswürdige andere Geräte weiterzugeben
   - Methode neue RFID-Tags unter Angabe der jeweiligen Passwörter durch Änderung der Passwörter auf das gemeinsame Passwort in Besitz zu nehmen.

Die Erfindung beschränkt sich in ihrer Ausführung nicht auf die vorstehend angegebenen bevorzugten Ausführungsbeispiele. Vielmehr ist eine Anzahl von Varianten denkbar, die von der erfindungsgemäßen Lehre auch bei grundsätzlich anders gearteten Ausführungen Gebrauch machen.

Die Erfindung wird nachfolgend unter Bezugnahme auf die Figuren der Zeichnungen an mehreren Ausführungsbeispielen näher erläutert. Es zeigen:
- Fig. 1: eine schematische Darstellung des Datenflusses in einem ersten Beispiel eines RFID-Tags im Zusammenwirken mit einem Lesegerät;
- Fig. 2: eine schematische Darstellung des Datenflusses in einer zweiten erfindungsgemäßen Ausführungsform des RFID-Tags mit sicherer Passwortverifikation;
- Fig. 3: ein Ablaufdiagramm des erfindungsgemäßen Verfahrens.

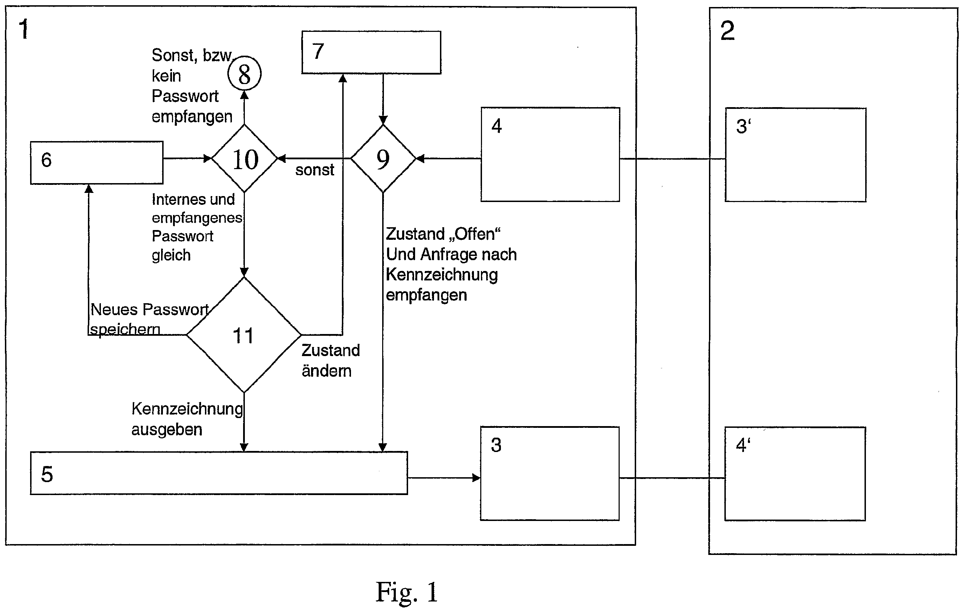

In Fig. 1 ist ein erstes Beispiel dargestellt, bei dem eine einfache Ausführungsform des RFID-Tags dargestellt ist.

Der RFID-Tag 1 weist einen Speicher 5 auf, der eine eindeutige Kennzeichnung für den Tag selbst aufweist. Damit ist dieser von allen anderen Tags eindeutig unterscheidbar.

Ferner weist der RFID-Tag 1 einen Speicher 6 für ein internes Passwort auf.

Des Weiteren weist RFID-Tag 1 einen Speicher 7 für den internen Zustand auf, der angibt, ob bestimmte Funktionen ausgeführt werden können oder nicht.

Der RFID-Tag 1 steht im Betrieb in Wechselwirkung mit einem Lesegerät 2 (Reader). Der RFID-Tag 1 bzw. das Lesegerät (2) weisen jeweils eine Sendevorrichtung 3, 3' und eine Empfangsvorrichtung 4, 4' für Daten auf, die von der Bauart durchaus unterschiedlich sein können.

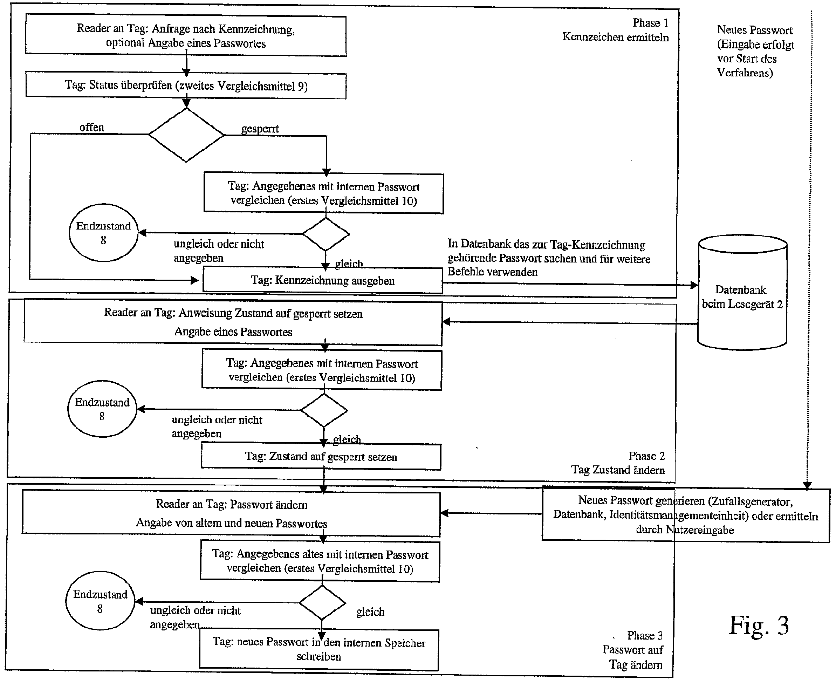

Die einzelnen Abfragen werden in Fig. 3 separat erläutert, so dass darauf Bezug genommen wird.

Zunächst wird vom Lesegerät 2 eine Anfrage nach einer Kennzeichnung an den RFID-Tag 1 gerichtet. Alternativ oder zusätzlich kann ein Passwort angegeben werden.

Im zweiten Vergleichsmittel 9 der Fig. 1 wird der interne Zustand des RFID-Tags 1 überprüft. Er ist entweder "offen" oder "gesperrt" und als Flag im Speicher 7 abgelegt.

Wenn der RFID-Tag "gesperrt" ist wird die eindeutige Kennzeichnung des Speichers 5 nur an berechtigte Lesegeräte 2 ausgegeben, welche die Kenntnis des in Speicher 6 gespeicherten internen Passwortes nachweisen.

Im ersten Vergleichsmittel 10 der Fig. 1 wird das interne Passwort mit einem gegebenenfalls vom Lesegerät eingelesenen Passwort (Lesegerätpasswort 6') verglichen.

Wenn kein Passwort vom Lesegerät 2 eingelesen wurde oder die Passwörter nicht übereinstimmen, dann bricht das Verfahren mit dem Endzustand 8 ab. Optional wird eine Fehlermeldung ausgegeben.

Wenn das interne Passwort und das empfangene Passwort übereinstimmen, wird die vom Lesegerät 2 angeforderte Funktion ausgeführt. Mittels einer Verzweigungseinrichtung 11 wird entschieden ob:
- die eindeutige Kennzeichnung aus Speicher 5 ausgegeben wird,
- der interne Zustand in Speicher 7 geändert wird,
- ein neues internes Passwort in den Speicher 6 gespeichert wird.

Wichtig ist dabei, dass jeder in einem RFID-Tag 1 gespeicherte Wert, der in der Lage ist das Objekt eindeutig zu identifizieren - der also in jedem Objekt anders ausfällt, eine eindeutige Kennzeichnung 5 des RFID-Tags 1 darstellt.

Bei alternativen Ausführungsformen kann die Reihenfolge der Vergleiche gemäß Anspruch 1 durchgeführt werden. Zudem kann die Überprüfung des Zustandes bei allen Anfragen außer nach der Kennzeichnung wegfallen.

Ferner ist es alternativ möglich, im Endzustand 8 eine Fehlermeldung oder ähnliches an das Lesegerät 2 zu senden. Grundsätzlich ist es beliebig, ob und wie die Zustands- oder Passwortänderung an das Lesegerät 2 zurückgesendet werden.

Es sollten auch die Kombination von Passwort ändern und Zustand sperren (als ein Funktionsaufruf) geschützt sein.

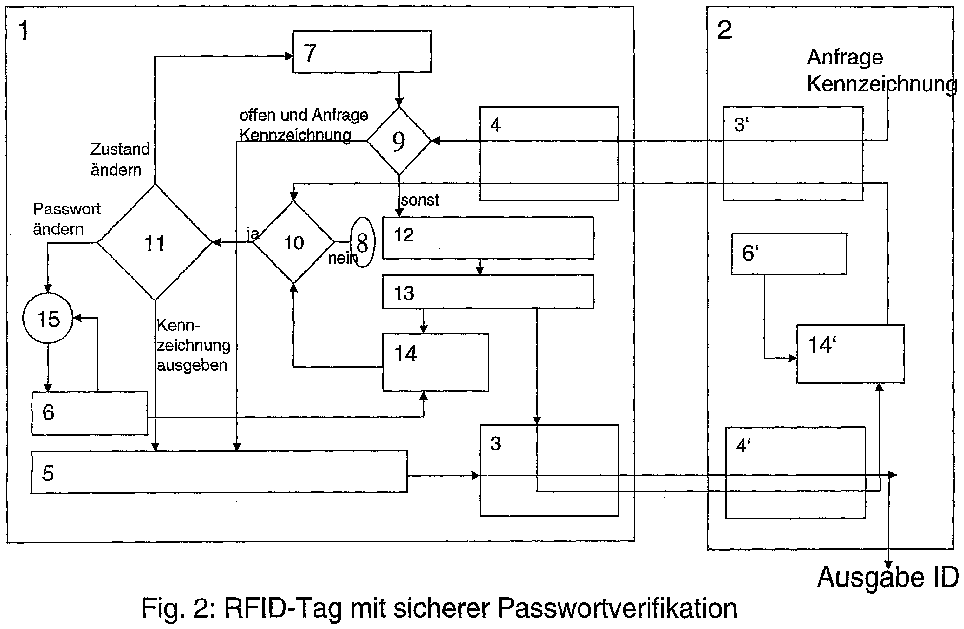

Fig. 2 zeigt den RFID-Tag 1 mit allen in Fig. 1 dargestellten Funktionen, so dass auf die obige Beschreibung Bezug genommen werden kann. Allerdings erfolgt die Passwortverifikation auf besonderes sichere Art und Weise. Dies geschieht dann in zwei Schritten:
a) Zuerst wird die Funktion aufgerufen,
b) danach (wenn der RFID-Tag 1 gesperrt ist) wird ein

Zufallswert geschickt, mit der der Reader das Passwort verschlüsselt sendet - bei Erfolg wird die zuvor angeforderte Funktion ausgeführt. Dies wird im Folgenden detailliert dargestellt.

In Abwandlung des in Fig. 1 beschriebenen Beispiels erfolgt hier im zweiten Vergleichsmittel 9 eine geänderte Bearbeitung. Wenn der interne Zustand (siehe Speicher 7) gesperrt ist, dann wird ein Zufallswertgenerator 12 angesprochen, der einen Zufallswert generiert. Dieser wird in einem Zwischenspeicher 13 abgespeichert.

Anschließend wird dieser Zufallswert an das Lesegerät 2 über die Sendevorrichtung 3 gesendet.

Parallel wird dieser Zufallswert zusammen mit dem internen Passwort aus Speicher 6 von einem Prüfwertmittel 14 verarbeitet. Das Prüfwertmittel 14 berechnet aus diesen Daten einen einzigartigen Prüfwert.

Das Lesegerät 2 hat grundsätzlich die gleichen Informationen, nämlich ein Lesegerätpasswort 6' und den empfangenen Zufallswert. Mit einem baugleichen Prüfwertmittel 14' wird im Lesegerät 2 ebenfalls ein Prüfwert ermittelt und an den RFID-Tag 1 übertragen.

Im ersten Vergleichsmittel 10 wird ein Vergleich zwischen dem vom RFID-Tag 1 generierte Prüfwert und dem vom Lesegerät 2 generierten Prüfwert durchgeführt.

Stimmen die Prüfwerte überein, so erfolgt die Weiterverarbeitung mit der Verzweigungseinrichtung 11 wie in Fig. 1 beschrieben.

Wenn die Prüfwerte nicht übereinstimmen, so erfolgt analog zu Fig. 1 ein Abbruch.

Ferner ist ein Mittel 15 zum Ändern des internen Passwortes im Speicher 6 vorgesehen. Dieses generiert ein neues internes Passwort, aus dem bisherigen internen Passwort und einem vom Lesegerät 2 empfangenen Wert. Das Verzweigungsmittel 11 gibt in diesem Fall einen entsprechenden Befehl aus. Somit fragt der RFID-Tag 1 das Passwort ab, wenn dies erforderlich ist.

Fig. 3 zeigt die Abfolge einer Ausführungsform des Verfahrens gemäß Fig. 1 oder 2. Dabei wird eine Anfrage der eindeutigen Kennzeichnung und eine nachfolgende Passwortänderung (zur Besitz(er)übergabe) und eine anschließende Sperrung des internen Zustands des RFID-Tags beschrieben.

Mit diesem Verfahren ist eine elektronische Besitzübergabe möglich. Die Kenntnis des internen Passwortes des Tags ist mit dem Status des "Besitzens" gleichbedeutend.

### Bezugszeichenliste

- 1: RFID-Tag
- 2: Lesegerät (Reader)
- 3: Sendevorrichtung des RFID-Tags
- 4: Empfangsvorrichtung des RFID-Tags
- 3': Sendevorrichtung des Lesegerätes
- 4': Empfangsvorrichtung des Lesegerätes
- 5: Speicher für eindeutige Kennzeichnung des RFID-Tag
- 6: Speicher für das interne Passwort
- 6': Speicher für Lesegerätpasswort
- 7: Speicher für einen internen Zustand
- 8: Endzustand, optional Ausgabe einer Fehlermeldung
- 9: zweites Vergleichsmittel, Zustand, empfangene Anfrage
- 10: erstes Vergleichsmittel für empfangene und gespeicherte Wertes
- 11: Verzweigungseinrichtung entsprechend empfangener Anfrage des Lesegerätes
- 12: Zufallswertgenerator (Randomisierungsmittel)
- 13: Zwischenspeicher für Zufallswert
- 14: Prüfwertmittel des RFID-Tags, Berechnungsfunktion (Berechnung eines Ausgabewertes aus einem oder mehreren Eingabewerten, wobei die Eingabewerte aus dem Ausgabewert nicht rekonstruiert werden können - z.B. Hashfunktion)
- 14': Prüfwertmittel des Lesegerätes
- 15: Mittel zum Berechnen eines neuen Passwortes

## Patentansprüche

1. RFID-Tag (1) mit
a) einer Sendevorrichtung (4) und einer Empfangsvorrichtung (3) von Daten eines Lesegerätes (2),
b) einem Speicher (5) für den RFID-Tag (1) eindeutig kennzeichnende Identifikationsdaten
c) einem Steuermittel, das Funktionen automatisch in Abhängigkeit davon ausführt, dass das Lesegerät (2)
- die Kenntnis eines internen Passwortes in einem Speicher für das interne Passwort (6) mittels eines Vergleiches nachweist und/oder
- eine im Speicher für einen internen Zustand (7) gespeicherte Information die Ausführung der Funktion gestattet,
d) einem ersten Vergleichsmittel (10) zum Vergleichen zweier Werte;
e) einem Änderungsmittel zur Änderung des gespeicherten Passwortes und/oder des internen Zustandes in Abhängigkeit von einem vorherigen Vergleich des internen Passwortes mit einem vom Lesegerät (2) empfangenen,
f) einem Randomisiermittel (12) zur Erzeugung von Zufallswerten,
g) einem Prüfwertmittel (14) zur Berechnung eines oder mehrerer Prüfwerte aus mindestens zwei Eingabewerten,
h) einem flüchtigen oder nichtflüchtigen, wiederbeschreibbaren Zwischenspeicher (13) zum Zwischenspeichern eines Zufallswertes, und
i) einem nichtflüchtigen und nicht wiederbeschreibbaren Speicher zum Einspeichern eines geheimen Wertes,
**dadurch gekennzeichnet, dass** eine Challenge-Response Funktion zum Verifizieren der Identifikationsdaten vorgesehen ist, indem ein vom Lesegerät (2) empfangener Zufallswert und der geheime Wert als Eingabe des Prüfwertmittels (14) verwendet und das Ergebnis an das Lesegerät (2) zurückgesendet wird, wobei
die Echtheit der von einem RFID-Tag (1) ausgesendeten Identifikationsdaten unter Mitwirkung des Herstellers mittels des Ergebnisses verifizierbar sind, und
wobei die Challenge-Response Funktion auch zum Vergleich des gespeicherten internen Passwortes vorgesehen ist, indem
eine Anfrage des Lesegerätes (2) zum Vergleichen des gespeicherten Passwortes mit dem Zwischenspeichern und Aussenden eines mit dem Randomisiermittels (12) generierten Zufallswertes beantwortet wird, wobei
die Antwort des Lesegerätes (2) auf das Aussenden des Zufallswertes verglichen wird mit dem Ergebnis des Prüfwertmittels (14), wobei die Werte aus dem Zwischenspeicher des Zufallswertes (13) und aus dem Speicher des internen Passwortes (6) als Eingabe des Prüfwertmittels (14) verwendet werden oder wobei die Antwort des Lesegerätes (2) auf das Aussenden des Zufallswertes und dieses Ergebnis des Prüfwertmittels (14) als Eingabe für das erste Vergleichsmittel (10) verwendet werden.

2. RFID-Tag nach Anspruch 1, mit einem wiederbeschreibbaren Speicher (6) zum Einspeichern des internen Passwortes.

3. RFID-Tag nach mindestens einem der vorhergehenden Ansprüche, wobei bei einem positiven Ausgang des Vergleiches mittels des ersten Vergleichsmittels (10) die interne Passwort-Verifikation als erfolgreich andernfalls als erfolglos bewertet wird.

4. RFID-Tag nach mindestens einem der vorhergehenden Ansprüche, mit Mittel zum Aussenden zumindest von Teilen der Identifikationsdaten und/oder, mit einem Speicher (7) für den internen Zustand, wobei der interne Zustand festlegt, ob und welche Teile der Identifikationsdaten ausgegeben werden dürfen.

5. RFID-Tag nach Anspruch 4, wobei die Funktion zum Aussenden von Teilen der Identifikationsdaten, durch ein zweites Vergleichsmittel (9) abhängig von dem internen Zustand ausgeführt wird.

6. RFID-Tag nach Anspruch 3 und 4, wobei das Aussenden der Identifikationsdaten nur durchführbar ist, wenn eine vorherige Passwort-Verifikation erfolgreich war, wobei im Erfolgsfall die Identifikationsdaten vollständig aussendbar sind.

7. RFID-Tag nach Anspruch 5 oder 6, wobei die Aussendung von Teilen der Identifikationsdaten entweder
durch ein zweites Vergleichsmittel (9) abhängig von dem internen Zustand ausgeführt wird oder
nur durchführbar ist, wenn eine vorherige Passwort-Verifikation erfolgreich war, wobei im Erfolgsfall die Identifikationsdaten vollständig aussendbar sind.

8. RFID-Tag nach Anspruch 7, bei dem eine Funktion zum Ändern des internen Zustandes vorgesehen ist, die nur nach einer erfolgreichen Passwort-Verifikation durchgeführt wird.

9. RFID-Tag nach mindestens einem der vorhergehenden Ansprüche, mit einem Mittel zum Berechnen eines neuen Passwortes aus zwei Eingabewerten, einem empfangenen Wert und dem Wert aus dem Speicher des Passwortes und/oder bei dem das neue Passwort direkt empfangbar ist.

10. RFID-Tag nach Anspruch 9, wobei eine Möglichkeit zum Ändern des Passwortes vorgesehen ist, wobei das durch das Mittel oder direkt empfangene Passwort in den Speicher (6) für das interne Passwort abgelegt wird, und wobei die Funktion zum Ändern des Passwortes bevorzugt nur durchgeführt wird, wenn eine vorherige Passwort-Verifikation erfolgreich war.

11. RFID-Tag nach Ansprüchen 1 - 10 mit der besonderen Eigenschaft, dass Funktionen vorgesehen sind, die nur bei bestimmten Zuständen gemäß Anspruch 5 oder nach Verifikation des Passwortes gemäß Anspruch 3 ausgeführt werden.

12. RFID-Tag nach Anspruch 1 bis 10 mit der besonderen Eigenschaft, dass zusätzliche Speicher vorgesehen sind, die nur bei bestimmten Zuständen (Anspruch 5) oder nach Verifikation des Passwortes (Anspruch 3) zugegriffen werden können.

13. Lesegerät (2) mit einem Mittel zum Kommunizieren mit mindestens einem RFID-Tag (1), der RFID-Tag (1) mit
a) einer Sendevorrichtung (4) und einer Empfangsvorrichtung (3) von Daten des Lesegerätes (2),
b) einem Speicher (5) für den RFID-Tag (1) eindeutig kennzeichnende Identifikationsdaten,
c) einem Steuermittel, das Funktionen automatisch in Abhängigkeit davon ausführt, dass das Lesegerät (2)
- die Kenntnis eines internen Passwortes in einem Speicher für das interne Passwort (6) mittels eines Vergleiches nachweist und/oder
- eine im Speicher für einen internen Zustand (7) gespeicherte Information die Ausführung der Funktion gestattet,
d) einem ersten Vergleichsmittel (10) zum Vergleichen zweier Werte;
e) einem Änderungsmittel zur Änderung des gespeicherten Passwortes und/oder des internen Zustandes in Abhängigkeit von einem vorherigen Vergleich des internen Passwortes mit einem vom Lesegerät (2) empfangenen,
f) einem Randomisiermittel (12) zur Erzeugung von Zufallswerten,
g) einem Prüfwertmittel (14) zur Berechnung eines oder mehrerer Prüfwerte aus mindestens zwei Eingabewerten,
h) einem flüchtigen oder nichtflüchtigen, wiederbeschreibbaren Zwischenspeicher (13) zum Zwischenspeichern eines Zufallswertes, und
i) einem nichtflüchtigen und nicht wiederbeschreibbaren Speicher zum Einspeichern eines geheimen Wertes,
**dadurch gekennzeichnet, dass** eine Challenge-Response Funktion zum Verifizieren der Identifikationsdaten vorgesehen ist, indem ein vom Lesegerät (2) empfangener Zufallswert und der geheime Wert als Eingabe des Prüfwertmittels (14) verwendet und das Ergebnis an das Lesegerät (2) zurückgesendet wird, wobei
die Echtheit der von einem RFID-Tag (1) ausgesendeten Identifikationsdaten unter Mitwirkung des Herstellers mittels des Ergebnisses verifizierbar sind, und
wobei die Challenge-Response Funktion auch zum Vergleich des gespeicherten internen Passwortes vorgesehen ist, indem
eine Anfrage des Lesegerätes (2) zum Vergleichen des gespeicherten Passwortes mit dem Zwischenspeichern und Aussenden eines mit dem Randomisiermittels (12) generierten Zufallswertes beantwortet wird, wobei
die Antwort des Lesegerätes (2) auf das Aussenden des Zufallswertes verglichen wird mit dem Ergebnis des Prüfwertmittels (14), wobei die Werte aus dem Zwischenspeicher des Zufallswertes (13) und aus dem Speicher des internen Passwortes (6) als Eingabe des Prüfwertmittels (14) verwendet werden oder wobei die Antwort des Lesegerätes (2) auf das Aussenden des Zufallswertes und dieses Ergebnis des Prüfwertmittels (14) als Eingabe für das erste Vergleichsmittel (10) verwendet werden; und
das Lesegerät (2) mit
a1) einem Mittel zum Nachweis des im RFID-Tag gespeicherten Passwortes,
b1) einem Abfragemittel für gespeicherte Daten,
c1) einem Änderungsmittel für den internen Zustand des RFID-Tags und das Passwort des RFID-Tags.

14. Lesegerät nach Anspruch 13, mit einem Speicher (6') für ein Lesegerätpasswort und/oder einem Mittel zum Berechnen eines Prüfwertes, wobei dieses Mittel die gleiche oder die umgekehrte Berechnung realisiert wie das Prüfwertmittel (14).

15. Lesegerät nach Anspruch 14, mit einem Mittel zum Senden des Lesegerätpasswortes.

16. Lesegerät nach Anspruch 14 oder, mit einer oder mehreren der folgenden Funktionen:
eine Funktion, die einen empfangenen Zufallswert und das Lesegerätpasswort, insbesondere als Eingabe für ein Mittel verwendet und das Ergebnis an einen RFID-Tag (1) absendet,
eine Funktion zum Abfragen der Identifikationsdaten eines RFID-Tags nach dem Verifizieren des Passwortes,
eine Funktion zum Ändern des internen Zustandes auf dem RFID-Tag (1) nach Verifizieren des Passwortes,
eine Funktion zum Ändern des internen Passwortes auf dem RFID-Tag (1) nach Verifikation des bisherigen Passwortes, wobei das neue Passwort im Klartext gesendet wird oder mit Hilfe eines Mittels aus dem bisherigen und dem neuen Passwort ein Prüfwert berechnet und an das RFID-Tag gesendet wird.

17. Verfahren für ein Lesegerät (2) zum Verifizieren der Identifikationsdaten eines RFID-Tags (1), der RFID-Tag (1) mit
a) einer Sendevorrichtung (4) und einer Empfangsvorrichtung (3) von Daten des Lesegerätes (2),
b) einem Speicher (5) für den RFID-Tag (1) eindeutig kennzeichnende Identifikationsdaten
c) einem Steuermittel, das Funktionen automatisch in Abhängigkeit davon ausführt, dass das Lesegerät (2)
- die Kenntnis eines internen Passwortes in einem Speicher für das interne Passwort (6) mittels eines Vergleiches nachweist und/oder
- eine im Speicher für einen internen Zustand (7) gespeicherte Information die Ausführung der Funktion gestattet,
d) einem ersten Vergleichsmittel (10) zum Vergleichen zweier Werte;
e) einem Änderungsmittel zur Änderung des gespeicherten Passwortes und/oder des internen Zustandes in Abhängigkeit von einem vorherigen Vergleich des internen Passwortes mit einem vom Lesegerät (2) empfangenen,
f) einem Randomisiermittel (12) zur Erzeugung von Zufallswerten,
g) einem Prüfwertmittel (14) zur Berechnung eines oder mehrerer Prüfwerte aus mindestens zwei Eingabewerten,
h) einem flüchtigen oder nichtflüchtigen, wiederbeschreibbaren Zwischenspeicher (13) zum Zwischenspeichern eines Zufallswertes, und
i) einem nichtflüchtigen und nicht wiederbeschreibbaren Speicher zum Einspeichern eines geheimen Wertes,
**dadurch gekennzeichnet, dass**
eine Challenge-Response Funktion zum Verifizieren der Identifikationsdaten vorgesehen ist, indem ein vom Lesegerät (2) empfangener Zufallswert und der geheime Wert als Eingabe des Prüfwertmittels (14) verwendet und das Ergebnis an das Lesegerät (2) zurückgesendet wird,
wobei
die Echtheit der von einem RFID-Tag (1) ausgesendeten Identifikationsdaten unter Mitwirkung des Herstellers mittels des Ergebnisses verifizierbar sind, und
wobei die Challenge-Response Funktion auch zum Vergleich des gespeicherten internen Passwortes vorgesehen ist,
indem
eine Anfrage des Lesegerätes (2) zum Vergleichen des gespeicherten Passwortes mit dem Zwischenspeichern und Aussenden eines mit dem Randomisiermittels (12) generierten Zufallswertes beantwortet wird, wobei die Antwort des Lesegerätes (2) auf das Aussenden des Zufallswertes verglichen wird mit dem Ergebnis des Prüfwertmittels (14), wobei die Werte aus dem Zwischenspeicher des Zufallswertes (13) und aus dem Speicher des internen Passwortes (6) als Eingabe des Prüfwertmittels (14) verwendet werden oder wobei die Antwort des Lesegerätes (2) auf das Aussenden des Zufallswertes und dieses Ergebnis des Prüfwertmittels (14) als Eingabe für das erste Vergleichsmittel (10) verwendet wird;
das Lesegerät (2) mit
a1) einem Mittel zum Nachweis des im RFID-Tag gespeicherten Passwortes,
b1) einem Abfragemittel für gespeicherte Daten,
c1) einem Änderungsmittel für den internen Zustand des RFID-Tags und das Passwort des RFID-Tags, wobei
a2) das Lesegerät (2) einen Zufallswert an den RFID-Tag (1) sendet und die erhaltene Antwort (Prüfwert), den Zufallswert und die Identifikationsdaten an den Hersteller des Produkts sendet, welches den RFID-Tag (1) trägt und
b2) der Hersteller mit "wahr" antwortet, wenn die Verifikation erfolgreich war.

18. Verfahren nach Anspruch 17, bei dem das Lesegerät (2) vorab eine gültige Kombination aus Zufallswert und Prüfwert für Identifikationsdaten vom Hersteller erfragt und die Antwort des RFID-Tags mit dem in der Kombination enthaltenen Prüfwert vergleicht.

19. Verfahren zum Ändern eines auf einem RFID-Tags (1) gespeicherten Passwortes, der RFID-Tag (1) mit
a) einer Sendevorrichtung (4) und einer Empfangsvorrichtung (3) von Daten eines Lesegerätes (2),
b) einem Speicher (5) für den RFID-Tag (1) eindeutig kennzeichnende Identifikationsdaten
c) einem Steuermittel, das Funktionen automatisch in Abhängigkeit davon ausführt, dass das Lesegerät (2)
- die Kenntnis eines internen Passwortes in einem Speicher für das interne Passwort (6)) mittels eines Vergleiches nachweist und/oder
- eine im Speicher für einen internen Zustand (7) gespeicherte Information die Ausführung der Funktion gestattet,
d) einem ersten Vergleichsmittel (10) zum Vergleichen zweier Werte;
e) einem Änderungsmittel zur Änderung des gespeicherten Passwortes und/oder des internen Zustandes in Abhängigkeit von einem vorherigen Vergleich des internen Passwortes mit einem vom Lesegerät (2) empfangenen,
f) einem Randomisiermittel (12) zur Erzeugung von Zufallswerten,
g) einem Prüfwertmittel (14) zur Berechnung eines oder mehrerer Prüfwerte aus mindestens zwei Eingabewerten,
h) einem flüchtigen oder nichtflüchtigen, wiederbeschreibbaren Zwischenspeicher (13) zum Zwischenspeichern eines Zufallswertes, und
i) einem nichtflüchtigen und nicht wiederbeschreibbaren Speicher zum Einspeichern eines geheimen Wertes,
**dadurch gekennzeichnet, dass**
eine Challenge-Response Funktion zum Verifizieren der Identifikationsdaten vorgesehen ist, indem ein vom Lesegerät (2) empfangener Zufallswert und der geheime Wert als Eingabe des Prüfwertmittels (14) verwendet und das Ergebnis an das Lesegerät (2) zurückgesendet wird,
wobei
die Echtheit der von einem RFID-Tag (1) ausgesendeten Identifikationsdaten unter Mitwirkung des Herstellers mittels des Ergebnisses verifizierbar sind, und
wobei die Challenge-Response Funktion auch zum Vergleich des gespeicherten internen Passwortes vorgesehen ist,
indem
eine Anfrage des Lesegerätes (2) zum Vergleichen des gespeicherten Passwortes mit dem Zwischenspeichern und Aussenden eines mit dem Randomisiermittels (12) generierten Zufallswertes beantwortet wird, wobei
die Antwort des Lesegerätes (2) auf das Aussenden des Zufallswertes verglichen wird mit dem Ergebnis des Prüfwertmittels (14), wobei die Werte aus dem Zwischenspeicher des Zufallswertes (13) und aus dem Speicher des internen Passwortes (6) als Eingabe des Prüfwertmittels (14) verwendet werden oder wobei die Antwort des Lesegerätes (2) auf das Aussenden des Zufallswertes und dieses Ergebnis des Prüfwertmittels (14) als Eingabe für das erste Vergleichsmittel (10) verwendet werden; wobei:
a1) ein Lesegerät (2) zuerst die Kenntnis des bisherigen Passwortes nachweist und
b1) danach das neue Passwort übermittelt, das Lesegerät (2) mit
a2) einem Mittel zum Nachweis des im RFID-Tag gespeicherten Passwortes,
b2) einem Abfragemittel für gespeicherte Daten,
c2) einem Änderungsmittel für den internen Zustand des RFID-Tags und das Passwort des RFID-Tags.

20. Verfahren nach Anspruch 19 zum Ändern der Passwörter aller in einem Zeitraum von dem Lesegerät (2) kontaktierter RFID-Tags (1) auf ein gemeinsames Passwort, welche entweder vorgegeben oder zu Beginn des Verfahrens zufällig gewählt wird und gemeinsame Passwort kontrolliert werden kann.

21. Verfahren nach Anspruch 20 zum Wechsel des Besitzers eines oder mehrerer RFID-Tags (1), wobei pro RFID-Tag (1) zweimal eine Passwortänderung durchgeführt wird, wobei ein zufällig gewähltes Zwischenpasswort verwendet wird.

## Claims

1. An RFID tag (1) comprising
a) a transmitting device (4) and a receiving device (3) of data of a reader (2),
b) a memory (5) for identification data uniquely characterizing the RFID tag (1),
c) a control means, which automatically executes functions depending on that the reader (2)
- proves the knowledge of an internal password in a memory for the internal password (6) by means of a comparison, and/or
- allows information stored in the memory for an internal state (7) to execute the function,
d) a first comparison means (10) for comparing two values;
e) a changing means for changing the stored password and/or the internal state depending on a previous comparison of the internal password with one received by the reader (2)
(f) a randomizer (12) for generating random values,
(g) a test value means (14) for calculating one or more test values form at least two input values,
(h) a volatile or non-volatile, rewritable buffer (13) for buffering a random value, and
(i) a non-volatile and non-rewritable memory for storing a secret value, **characterized in that**
a challenge-response function for verifying the identification data is provided by using a random value received by the reader (2) and the secret value as an input of the test value means (14) and transmitting the result back to the reader (2), wherein
the authenticity of identification data transmitted by an RFID tag (1) can be verified with the help of the manufacturer by means of the result, and
wherein the challenge-response function is also intended for comparing the stored internal password
by
answering a request of the reader (2) to compare the stored password with buffering and transmitting a random value generated with the randomizer (12), wherein
the response of the reader (2) to the transmission of the random value is compared to the result of the test value means (14), wherein the values from the buffer of the random value (13) and from the memory of the internal password (6) are used as an input of the test value means (14), or wherein the response of the reader (2) to the transmission of the random value and this result of the test value means (14) are used as an input for the first comparison means (10).

2. The RFID tag according to claim 1, comprising a rewritable memory (6) for storing the internal password.

3. The RFID tag according to at least one of the preceding claims, wherein for a positive outcome of the comparison by means of the first comparison means (10) the internal password verification is judged to be successful, otherwise unsuccessful.

4. The RFID tag according to at least one of the preceding claims, comprising means for transmitting at least parts of the identification data and/or a memory (7) for an internal state, wherein the internal state determines whether and what parts of the identification data may be issued.

5. The RFID-tag according to claim 4, wherein the function for transmitting parts of the identification data is performed by a second comparison means (9) depending on the internal state.

6. The RFID-tag according to claim 3 and 4, wherein the transmission of the identification data can only be performed if a previous password verification was successful, wherein in case of success the identification data can be transmitted completely.

7. The RFID-tag according to claim 5 or 6, wherein the transmission of parts of the identification data
is carried out either by a second comparison means (9) depending on the internal state, or
can only be carried out if a previous password verification was successful, wherein in case of success the identification data can be transmitted completely.

8. The RFID-tag according to claim 7, wherein a function for changing the internal state is provided, which function is carried out only after a successful password verification.

9. The RFID-tag according to at least one of the preceding claims, comprising a means for calculating a new password from two input values, a received value, and the value from the memory of the password and/or in which the new password is directly receivable.

10. The RFID-tag according to claim 9, wherein a possibility for changing the password is provided, wherein the password received by the means or directly is deposited in the memory (6) for the internal password, and wherein the function for changing the password is preferably performed only if a previous password verification was successful.

11. The RFID-tag according to claims 1 - 10, with the specific characteristic that functions that are only carried out for defined conditions according to claim 5 or after verification of the password according to claim 3 are provided.

12. The RFID-tag according to claims 1 - 10, with the specific characteristic that additional memories that can only be accessed for defined conditions (claim 5) or after verification of the password (claim 3) are provided.

13. A reader (2) comprising a means for communicating with at least one RFID tag (1), the RFID tag (1) comprising
a) a transmitting device (4) and a receiving device (3) of data of the reader (2),
b) a memory (5) for identification data uniquely characterizing the RFID tag (1),
c) a control means, which automatically executes functions depending on that the reader (2)
- proves the knowledge of an internal password in a memory for the internal password (6) by means of a comparison, and/or
- allows information stored in the memory for an internal state (7) to execute the function,
d) a first comparison means (10) for comparing two values;
e) a changing means for changing the stored password and/or the internal state depending on a previous comparison of the internal password with one received by the reader (2)
(f) a randomizer (12) for generating random values,
(g) a test value means (14) for calculating one or more test values form at least two input values,
(h) a volatile or non-volatile, rewritable buffer (13) for buffering a random value, and
(i) a non-volatile and non-rewritable memory for storing a secret value,
**characterized in that**
a challenge-response function for verifying the identification data is provided by using a random value received by the reader (2) and the secret value as an input of the test value means (14) and transmitting the result back to the reader (2), wherein
the authenticity of identification data transmitted by an RFID tag (1) can be verified with the help of the manufacturer by means of the result, and
wherein the challenge-response function is also intended for comparing the stored internal password
by
answering a request of the reader (2) to compare the stored password with buffering and transmitting a random value generated with the randomizer (12), wherein
the response of the reader (2) to the transmission of the random value is compared to the result of the test value means (14), wherein the values from the buffer of the random value (13) and from the memory of the internal password (6) are used as an input of the test value means (14), or wherein the response of the reader (2) to the transmission of the random value and this result of the test value means (14) are used as an input for the first comparison means (10); and
the reader (2) comprising
(a1) a means for evidencing the password stored in the RFID tag,
(b1) a retrieval means for stored data,
(c1) a changing means for the internal state of the RFID tag and the password of the RFID tag.

14. The reader according to claim 13, comprising a memory (6') for a reader password and/or a means for calculating a test value, wherein this means realizes the same or the reverse calculation as the test value means (14).

15. The reader according to claim 14, comprising a means for transmitting the reader password.

16. The reader according to claim 14, comprising one or more of the following functions:
a function that uses a received random value and the reader password in particular as an input for a means, and sends the result to an RFID tag,
a function for retrieving the identification data of an RFID tag after verification of the password,
a function for changing the internal state on the RFID tag after verification of the password,
a function for changing the internal password on the RFID tag (1) after verification of the previous password, wherein the new password is transmitted in clear text, or a test value is calculated from the previous and the new password with the aid of an agent and trasnmitted to the RFID tag.

17. A method for a reader (2) for verifying the identification data of an RFID tag (1), the RFID tag comprising
a) a transmitting device (4) and a receiving device (3) of data of the reader (2),
b) a memory (5) for identification data uniquely characterizing the RFID tag (1),
c) a control means, which automatically executes functions depending on that the reader (2)
- proves the knowledge of an internal password in a memory for the internal password (6) by means of a comparison, and/or
- allows information stored in the memory for an internal state (7) to execute the function,
d) a first comparison means (10) for comparing two values;
e) a changing means for changing the stored password and/or the internal state depending on a previous comparison of the internal password with one received by the reader (2)
(f) a randomizer (12) for generating random values,
(g) a test value means (14) for calculating one or more test values form at least two input values,
(h) a volatile or non-volatile, rewritable buffer (13) for buffering a random value, and
(i) a non-volatile and non-rewritable memory for storing a secret value,
**characterized in that**
a challenge-response function for verifying the identification data is provided by using a random value received by the reader (2) and the secret value as an input of the test value means (14) and transmitting the result back to the reader (2), wherein
the authenticity of identification data transmitted by an RFID tag (1) can be verified with the help of the manufacturer by means of the result, and
wherein the challenge-response function is also intended for comparing the stored internal password
by
answering a request of the reader (2) to compare the stored password with buffering and transmitting a random value generated with the randomizer (12), wherein
the response of the reader (2) to the transmission of the random value is compared to the result of the test value means (14), wherein the values from the buffer of the random value (13) and from the memory of the internal password (6) are used as an input of the test value means (14), or wherein the response of the reader (2) to the transmission of the random value and this result of the test value means (14) are used as an input for the first comparison means (10);
the reader (2) comprising
(a1) a means for evidencing the password stored in the RFID tag,
(b1) a retrieval means for stored data,
(c1) a changing means for the internal state of the RFID tag and the password of the RFID tag, wherein
(a2) the reader (2) sends a random value to the RFID tag (1) and sends the response received (test value), the random value, and the identification data to the manufacturer of the product carrying the RFID tag, and
(b2) the manufacturer responds with "true" if the verification was successful.

18. The method according to claim 17, in which the reader (2) requests a valid combination of random value and test value for identification data from the manufacturer in advance and compares the response of the RFID tag with the test value included in the combination.

19. A method for changing a password stored on a RFID tag (1), the RFID tag (1) comprising
a) a transmitting device (4) and a receiving device (3) of data of a reader (2),
b) a memory (5) for identification data uniquely characterizing the RFID tag (1),
c) a control means, which automatically executes functions depending on that the reader (2)
- proves the knowledge of an internal password in a memory for the internal password (6) by means of a comparison, and/or
- allows information stored in the memory for an internal state (7) to execute the function,
d) a first comparison means (10) for comparing two values;
e) a changing means for changing the stored password and/or the internal state depending on a previous comparison of the internal password with one received by the reader (2)
(f) a randomizer (12) for generating random values,
(g) a test value means (14) for calculating one or more test values form at least two input values,
(h) a volatile or non-volatile, rewritable buffer (13) for buffering a random value, and
(i) a non-volatile and non-rewritable memory for storing a secret value,
**characterized in that**
a challenge-response function for verifying the identification data is provided by using a random value received by the reader (2) and the secret value as an input of the test value means (14) and transmitting the result back to the reader (2), wherein
the authenticity of identification data transmitted by an RFID tag (1) can be verified with the help of the manufacturer by means of the result, and wherein the challenge-response function is also intended for comparing the stored internal password
by
answering a request of the reader (2) to compare the stored password with buffering and transmitting a random value generated with the randomizer (12), wherein
the response of the reader (2) to the transmission of the random value is compared to the result of the test value means (14), wherein the values from the buffer of the random value (13) and from the memory of the internal password (6) are used as an input of the test value means (14), or wherein the response of the reader (2) to the transmission of the random value and this result of the test value means (14) are used as an input for the first comparison means (10); wherein
(a1) a reader (2) first of all evidences knowledge of the previous password,
(b1) then transmits the new password,
the reader (2) comprising
(a2) a means for evidencing the password stored in the RFID tag,
(b2) a retrieval means for stored data,
(c2) a changing means for the internal state of the RFID tag and the password of the RFID tag.

20. The method according to claim 19, for changing the passwords of all RFID tags (1) contacted by the reader (2) in a period of time to a common password, which is either predetermined or selected randomly at the beginning of the process, and common password can be controlled.

21. The method according to claim 20, for change of owner of one or more RFID tags (1), wherein a password change is performed twice per RFID tag (1), with a randomly selected temporary password being used.

## Revendications

1. Etiquette RFID (1) comprenant
a) un dispositif d'émission (4) et un dispositif de réception (3) de données d'un lecteur (2),
b) une mémoire (5) pour des données d'identification caractérisant de manière unique l'étiquette RFID (1),
c) un moyen de commande qui exécute des fonctions automatiquement en fonction du fait que le lecteur (2)
- détecte la connaissance d'un mot de passe interne dans une mémoire pour le mot de passe interne (6) au moyen d'une comparaison et/ou
- une information mémorisée dans la mémoire pour un état interne (7) permet l'exécution de la fonction,
d) un premier moyen de comparaison (10) pour la comparaison de deux valeurs ;
e) un moyen de modification pour la modification du mot de passe mémorisé et/ou de l'état interne en fonction d'une comparaison antérieure du mot de passe interne à un mot de passe reçu par le lecteur (2),
f) un moyen de randomisation (12) pour la génération de valeurs aléatoires,
g) un moyen de valeur d'essai (14) pour le calcul d'une ou plusieurs valeurs d'essai à partir d'au moins deux valeurs d'entrée,
h) une mémoire temporaire (13) volatile ou non volatile, réinscriptible, pour la mémorisation temporaire d'une valeur aléatoire, et
i) une mémoire non volatile et non réinscriptible pour la mémorisation d'une valeur secrète,
**caractérisée en ce que**
une fonction de défi-réponse pour la vérification des données d'identification est prévue **en ce qu'**une valeur aléatoire reçue par le lecteur (2) et la valeur secrète sont utilisées comme entrée du moyen de valeur d'essai (14) et le résultat est renvoyé au lecteur (2), dans laquelle
l'authenticité des données d'identification émises par une étiquette RFID (1) peut être vérifiée avec le concours du fabricant au moyen du résultat, et
dans laquelle la fonction de défi-réponse est également prévue pour la comparaison du mot de passe interne mémorisé,
**en ce que**
il est répondu à une demande du lecteur (2) pour la comparaison du mot de passe mémorisé avec la mémorisation temporaire et l'émission d'une valeur aléatoire générée avec le moyen de randomisation (12), dans laquelle la réponse du lecteur (2) à l'émission de la valeur aléatoire est comparée au résultat du moyen de valeur d'essai (14), dans laquelle les valeurs provenant de la mémoire temporaire de la valeur aléatoire (13) et de la mémoire du mot de passe interne (6) sont utilisées comme entrée du moyen de valeur d'essai (14) ou dans laquelle la réponse du lecteur (2) à l'émission de la valeur aléatoire et ce résultat du moyen de valeur d'essai (14) sont utilisés comme entrée pour le premier moyen de comparaison (10).

2. Etiquette RFID selon la revendication 1, comprenant une mémoire réinscriptible (6) pour la mémorisation du mot de passe interne.

3. Etiquette RFID selon au moins une des revendications précédentes, dans laquelle la vérification de mot de passe interne est évaluée comme réussie dans le cas d'une sortie positive de la comparaison au moyen du premier moyen de comparaison (10), autrement comme sans succès.

4. Etiquette RFID selon au moins une des revendications précédentes, comprenant un moyen pour l'émission d'au moins des parties des données d'identification et/ou comprenant une mémoire (7) pour l'état interne, dans laquelle l'état interne définit si et quelles parties des données d'identification peuvent être émises.

5. Etiquette RFID selon la revendication 4, dans laquelle la fonction pour l'émission de parties des données d'identification est exécutée par un second moyen de comparaison (9) en fonction de l'état interne.

6. Etiquette RFID selon les revendications 3 et 4, dans laquelle l'émission des données d'identification ne peut être réalisée que lorsqu'une vérification de mot de passe antérieure a été réussie, dans laquelle les données d'identification peuvent être entièrement émises en cas de réussite.

7. Etiquette RFID selon la revendication 5 ou 6, dans laquelle l'émission de parties des données d'identification
est exécutée par un second moyen de comparaison (9) en fonction de l'état interne ou
ne peut être réalisée que lorsqu'une vérification de mot de passe antérieure a été réussie, dans laquelle les données d'identification peuvent être entièrement émises en cas de réussite.

8. Etiquette RFID selon la revendication 7, dans laquelle une fonction pour la modification de l'état interne est prévue, laquelle n'est réalisée qu'après une vérification de mot de passe réussie.

9. Etiquette RFID selon au moins une des revendications précédentes, comprenant un moyen pour le calcul d'un nouveau mot de passe à partir de deux valeurs d'entrée, d'une valeur reçue et de la valeur provenant de la mémoire du mot de passe et/ou dans laquelle le nouveau mot de passe peut être directement reçu.

10. Etiquette RFID selon la revendication 9, dans laquelle une possibilité pour la modification du mot de passe est prévue, dans laquelle le mot de passe reçu par le moyen ou directement est déposé dans la mémoire (6) pour le mot de passe interne, et dans laquelle la fonction pour la modification du mot de passe n'est de préférence réalisée que lorsqu'une vérification de mot de passe antérieure a été réussie.

11. Etiquette RFID selon les revendications 1 à 10 avec la propriété particulière que des fonctions sont prévues, lesquelles ne sont exécutées qu'en cas de certains états selon la revendication 5 ou après vérification du mot de passe selon la revendication 3.

12. Etiquette RFID selon les revendications 1 à 10 avec la propriété particulière que des mémoires supplémentaires sont prévues, lesquelles ne peuvent être accédées qu'en cas de certains états (revendication 5) ou après vérification du mot de passe (revendication 3).

13. Lecteur (2) comprenant un moyen pour la communication avec au moins une étiquette RFID (1), l'étiquette RFID (1) comprenant
a) un dispositif d'émission (4) et un dispositif de réception (3) de données du lecteur (2),
b) une mémoire (5) pour des données d'identification caractérisant de manière unique l'étiquette RFID (1),
c) un moyen de commande qui exécute des fonctions automatiquement en fonction du fait que le lecteur (2)
- détecte la connaissance d'un mot de passe interne dans une mémoire pour le mot de passe interne (6) au moyen d'une comparaison et/ou
- une information mémorisée dans la mémoire pour un état interne (7) permet l'exécution de la fonction,
d) un premier moyen de comparaison (10) pour la comparaison de deux valeurs ;
e) un moyen de modification pour la modification du mot de passe mémorisé et/ou de l'état interne en fonction d'une comparaison antérieure du mot de passe interne à un mot de passe reçu par le lecteur (2),
f) un moyen de randomisation (12) pour la génération de valeurs aléatoires,
g) un moyen de valeur d'essai (14) pour le calcul d'une ou plusieurs valeurs d'essai à partir d'au moins deux valeurs d'entrée,
h) une mémoire temporaire (13) volatile ou non volatile, réinscriptible, pour la mémorisation temporaire d'une valeur aléatoire, et
i) une mémoire non volatile et non réinscriptible pour la mémorisation d'une valeur secrète,
**caractérisé en ce que**
une fonction de défi-réponse pour la vérification des données d'identification est prévue **en ce qu'**une valeur aléatoire reçue par le lecteur (2) et la valeur secrète sont utilisées comme entrée du moyen de valeur d'essai (14) et le résultat est renvoyé au lecteur (2), dans lequel
l'authenticité des données d'identification émises par une étiquette RFID (1) peut être vérifiée avec le concours du fabricant au moyen du résultat, et
dans lequel la fonction de défi-réponse est également prévue pour la comparaison du mot de passe interne mémorisé,
**en ce que**
il est répondu à une demande du lecteur (2) pour la comparaison du mot de passe mémorisé avec la mémorisation temporaire et l'émission d'une valeur aléatoire générée avec le moyen de randomisation (12), dans lequel la réponse du lecteur (2) à l'émission de la valeur aléatoire est comparée au résultat du moyen de valeur d'essai (14), dans lequel les valeurs provenant de la mémoire temporaire de la valeur aléatoire (13) et de la mémoire du mot de passe interne (6) sont utilisées comme entrée du moyen de valeur d'essai (14) ou dans lequel la réponse du lecteur (2) à l'émission de la valeur aléatoire et ce résultat du moyen de valeur d'essai (14) sont utilisés comme entrée pour le premier moyen de comparaison (10) ; et
le lecteur (2) comprenant
a1) un moyen pour la détection du mot de passe mémorisé dans l'étiquette RFID,
b1) un moyen d'interrogation pour des données mémorisées,
c1) un moyen de modification pour l'état interne de l'étiquette RFID et le mot de passe de l'étiquette RFID.

14. Lecteur selon la revendication 13, comprenant une mémoire (6') pour un mot de passe de lecteur et/ou un moyen pour le calcul d'une valeur d'essai, dans lequel ce moyen réalise le même calcul que le ou le calcul inverse du moyen de valeur d'essai (14).

15. Lecteur selon la revendication 14, comprenant un moyen pour l'envoi du mot de passe de lecteur.

16. Lecteur selon la revendication 14 ou avec une ou plusieurs des fonctions suivantes :
une fonction qui utilise une valeur aléatoire reçue et le mot de passe de lecteur, notamment comme entrée pour un moyen et envoie le résultat à une étiquette RFID (1),
une fonction pour l'interrogation des données d'identification d'une étiquette RFID après la vérification du mot de passe,
une fonction pour la modification de l'état interne sur l'étiquette RFID (1) après vérification du mot de passe,
une fonction pour la modification du mot de passe interne sur l'étiquette RFID (1) après vérification du mot de passe précédent, dans lequel le nouveau mot de passe est envoyé en clair ou une valeur d'essai est calculée à l'aide d'un moyen à partir du mot de passe précédent et du nouveau mot de passe et envoyée à l'étiquette RFID.

17. Procédé pour un lecteur (2) pour la vérification des données d'identification d'une étiquette RFID (1), l'étiquette RFID (1) comprenant
a) un dispositif d'émission (4) et un dispositif de réception (3) de données du lecteur (2),
b) une mémoire (5) pour des données d'identification caractérisant de manière unique l'étiquette RFID (1),
c) un moyen de commande qui exécute des fonctions automatiquement en fonction du fait que le lecteur (2)
- détecte la connaissance d'un mot de passe interne dans une mémoire pour le mot de passe interne (6) au moyen d'une comparaison et/ou
- une information mémorisée dans la mémoire pour un état interne (7) permet l'exécution de la fonction,
d) un premier moyen de comparaison (10) pour la comparaison de deux valeurs ;
e) un moyen de modification pour la modification du mot de passe mémorisé et/ou de l'état interne en fonction d'une comparaison antérieure du mot de passe interne à un mot de passe reçu par le lecteur (2),
f) un moyen de randomisation (12) pour la génération de valeurs aléatoires,
g) un moyen de valeur d'essai (14) pour le calcul d'une ou plusieurs valeurs d'essai à partir d'au moins deux valeurs d'entrée,
h) une mémoire temporaire (13) volatile ou non volatile, réinscriptible, pour la mémorisation temporaire d'une valeur aléatoire, et
i) une mémoire non volatile et non réinscriptible pour la mémorisation d'une valeur secrète,
**caractérisé en ce que**
une fonction de défi-réponse pour la vérification des données d'identification est prévue **en ce qu'**une valeur aléatoire reçue par le lecteur (2) et la valeur secrète sont utilisées comme entrée du moyen de valeur d'essai (14) et le résultat est renvoyé au lecteur (2),
dans lequel
l'authenticité des données d'identification émises par une étiquette RFID (1) peut être vérifiée avec le concours du fabricant au moyen du résultat, et
dans lequel la fonction de défi-réponse est également prévue pour la comparaison du mot de passe interne mémorisé,
**en ce que**
il est répondu à une demande du lecteur (2) pour la comparaison du mot de passe mémorisé avec la mémorisation temporaire et l'émission d'une valeur aléatoire générée avec le moyen de randomisation (12), dans lequel la réponse du lecteur (2) à l'émission de la valeur aléatoire est comparée au résultat du moyen de valeur d'essai (14), dans lequel les valeurs provenant de la mémoire temporaire de la valeur aléatoire (13) et de la mémoire du mot de passe interne (6) sont utilisées comme entrée du moyen de valeur d'essai (14) ou dans lequel la réponse du lecteur (2) à l'émission de la valeur aléatoire et ce résultat du moyen de valeur d'essai (14) sont utilisés comme entrée pour le premier moyen de comparaison (10);
le lecteur (2) comprenant
a1) un moyen pour la détection du mot de passe mémorisé dans l'étiquette RFID,
b1) un moyen d'interrogation pour des données mémorisées,
c1) un moyen de modification pour l'état interne de l'étiquette RFID et le mot de passe de l'étiquette RFID, dans lequel
a2) le lecteur (2) envoie une valeur aléatoire à l'étiquette RFID (1) et envoie la réponse obtenue (valeur d'essai), la valeur aléatoire et les données d'identification au fabricant du produit qui porte l'étiquette RFID (1) et
b2) le fabricant répond par « vrai » lorsque la vérification a été réussie.

18. Procédé selon la revendication 17, dans lequel le lecteur (2) demande au préalable au fabricant une combinaison valable de valeur aléatoire et valeur d'essai pour des données d'identification et compare la réponse de l'étiquette RFID à la valeur d'essai contenue dans la combinaison.

19. Procédé pour la modification d'un mot de passe mémorisé sur une étiquette RFID (1), l'étiquette RFID (1) comprenant
a) un dispositif d'émission (4) et un dispositif de réception (3) de données d'un lecteur (2),
b) une mémoire (5) pour des données d'identification caractérisant de manière unique l'étiquette RFID (1),
c) un moyen de commande qui exécute des fonctions automatiquement en fonction du fait que le lecteur (2)
- détecte la connaissance d'un mot de passe interne dans une mémoire pour le mot de passe interne (6) au moyen d'une comparaison et/ou
- une information mémorisée dans la mémoire pour un état interne (7) permet l'exécution de la fonction,
d) un premier moyen de comparaison (10) pour la comparaison de deux valeurs ;
e) un moyen de modification pour la modification du mot de passe mémorisé et/ou de l'état interne en fonction d'une comparaison antérieure du mot de passe interne à un mot de passe reçu par le lecteur (2),
f) un moyen de randomisation (12) pour la génération de valeurs aléatoires,
g) un moyen de valeur d'essai (14) pour le calcul d'une ou plusieurs valeurs d'essai à partir d'au moins deux valeurs d'entrée,
h) une mémoire temporaire (13) volatile ou non volatile, réinscriptible, pour la mémorisation temporaire d'une valeur aléatoire, et
i) une mémoire non volatile et non réinscriptible pour la mémorisation d'une valeur secrète,
**caractérisé en ce que**
une fonction de défi-réponse pour la vérification des données d'identification est prévue **en ce qu'**une valeur aléatoire reçue par le lecteur (2) et la valeur secrète sont utilisées comme entrée du moyen de valeur d'essai (14) et le résultat est renvoyé au lecteur (2),
dans lequel
l'authenticité des données d'identification émises par une étiquette RFID (1) peut être vérifiée avec le concours du fabricant au moyen du résultat, et
dans lequel la fonction de défi-réponse est également prévue pour la comparaison du mot de passe interne mémorisé,
**en ce que**
il est répondu à une demande du lecteur (2) pour la comparaison du mot de passe mémorisé avec la mémorisation temporaire et l'émission d'une valeur aléatoire générée avec le moyen de randomisation (12), dans lequel la réponse du lecteur (2) à l'émission de la valeur aléatoire est comparée au résultat du moyen de valeur d'essai (14), dans lequel les valeurs provenant de la mémoire temporaire de la valeur aléatoire (13) et de la mémoire du mot de passe interne (6) sont utilisées comme entrée du moyen de valeur d'essai (14) ou dans lequel la réponse du lecteur (2) à l'émission de la valeur aléatoire et ce résultat du moyen de valeur d'essai (14) sont utilisés comme entrée pour le premier moyen de comparaison (10) ; dans lequel :
a1) un lecteur (2) détecte d'abord la connaissance du mot de passe précédent et
b1) transmet ensuite le nouveau mot de passe,
le lecteur (2) comprenant
a2) un moyen pour la détection du mot de passe mémorisé dans l'étiquette RFID,
b2) un moyen d'interrogation pour des données mémorisées,
c2) un moyen de modification pour l'état interne de l'étiquette RFID et le mot de passe de l'étiquette RFID.

20. Procédé selon la revendication 19 pour la modification des mots de passe de toutes les étiquettes RFID (1) avec lesquelles le lecteur (2) vient en contact dans une période en un mot de passe commun qui est soit prédéfini, soit choisi aléatoirement au début du procédé et le mot de passe commun peut être contrôlé.

21. Procédé selon la revendication 20 pour le changement du propriétaire d'une ou plusieurs étiquettes RFID (1), dans lequel une modification de mot de passe est effectuée deux fois par étiquette RFID (1), dans lequel un mot de passe temporaire choisi aléatoirement est utilisé.
